**Europäisches Patentamt**

**European Patent Office**

**Office européen des brevets**

(19)

(11) Veröffentlichungsnummer: **0 035 090**
**B1**

(12)

# EUROPÄISCHE PATENTSCHRIFT

(45) Veröffentlichungstag der Patentschrift:
10.08.83

(21) Anmeldenummer: 80890028.6

(22) Anmeldetag: 05.03.80

(51) Int. Cl.³: **C 09 D 5/08**, C 09 D 7/00,
C 09 D 3/72

(54) **Korrosionsschutzmittel.**

(43) Veröffentlichungstag der Anmeldung:
09.09.81 Patentblatt 81/36

(45) Bekanntmachung des Hinweises auf die Patenterteilung:
10.08.83 Patentblatt 83/32

(84) Benannte Vertragsstaaten:
**BE CH DE FR GB IT NL SE**

(56) Entgegenhaltungen:
FR-A-2 108 274
US-A-3 994 751

(73) Patentinhaber: **Bartak, Gottlieb, Hirschgasse 36,
A-4020 Linz (AT)**

(72) Erfinder: **Bartak, Gottlieb, Hirschgasse 36, A-4020 Linz
(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Korrosionsschutzmittel

Die Erfindung bezieht sich auf ein Korrosionsschutzmittel, enthaltend ein Polyurethanharz auf Diisocyanatbasis sowie Methylisobutylketon und Toluol.

Es sind zwar bereits verschiedenste Korrosionsschutzmittel bekannt, doch können diese bekannten Korrosionsschutzmittel nicht voll befriedigen, weil sie entweder in ihrem Anwendungsgebiet nur auf bestimmte Werkstoffe beschränkt sind, einen besonders vorbereiteten Untergrund benötigen, nicht auf feuchte und nasse Untergründe aufgetragen werden können, nicht gut haften, nicht säure- oder laugenfest sind, Empfindlichkeit gegen mechanische Beanspruchungen aufweisen oder einen vergleichsweise grossen Aufwand beim Auftragen auf den Untergrund erfordern und daher nicht universell eingesetzt werden können.

Es sind bereits Polyurethanharzlacke bekannt, für die ein Lösungsmittelgemisch verwendet wird, das neben anderen Lösungsmitteln Toluol und Methylisobutylketon enthält. Solche Lacke können aber keine Lehre für ein hochdiffundives Korrosionsschutzmittel ergeben, das auch auf feuchtem oder nassem Untergrund aufgetragen werden kann, weil es bei Lacken vor allem darauf ankommt, einen nicht eindringenden Überzug zu bilden.

Der Erfindung liegt somit die Aufgabe zugrunde, ein uneingeschränkt einsetzbares Korrosionsschutzmittel zu schaffen, das einfach herstellbar ist, auch auf feuchtem oder nassem Untergrund aufgetragen werden kann, ohne zusätzlichen Schutzanstrich auskommt und einen wirksamen Schutz vor Korrosion nicht zuletzt aufgrund seiner hochdiffundiven Wirkung ergibt.

Die Erfindung löst die gestellte Aufgabe dadurch, dass das Korrosionsschutzmittel aus 20–40 Gew.-% Polyurethanharz auf Diisocyanatbasis, 20–40 Gew.-% Methylisobutylketon und 20–40 Gew.-% Toluol besteht.

Durch die Verwendung der angegebenen Gewichtsanteile eines Polyurethanharzes auf Diisocyanatbasis wird ein besonders feuchtigkeitsverträgliches Korrosionsschutzmittel erhalten, das auch konservierend wirkt und auf allen feuchten, saugfähigen und auch nicht saugfähigen, fett- und ölfreien Untergründen haftet. Die hochdiffundive Wirkung wird durch das Methylisobutylketon und das Toluol erreicht, so dass das aus diesen drei Bestandteilen zusammengesetzte Korrosionsschutzmittel in die feinsten Mikrokapillaren eindringt.

Im Gegensatz zu Lacken enthält das erfindungsgemässe Korrosionsschutzmittel ausser dem Bindemittel und dem Lösungsmitel keine Pigmente oder Füllstoffe. Bei Lacken wird der wirksame Bindemittelanteil durch die Pigmente und Füllstoffe reduziert, weil ein gewisser Bindemittelanteil an den Füllstoffen und Pigmenten haften bleibt und absorbiert wird. Wird, um diesen Effekt bei den Lacken auszugleichen, der Bindemittelanteil jedoch erhöht, so leidet die Applikationsfähigkeit entscheidend. Die entscheidende Verbesserung gegenüber Lacken liegt bei dem erfindungsgemässen Korrosionsschutzmittel wohl in dem Sachverhalt begründet, dass aufgrund des Fehlens von jeglichen Pigmenten und Füllstoffen die Wirkung des Bindemitels erhöht ist, so dass mit einem für die zu erwartende Wirkung überraschend geringen Bindemittelanteil gearbeitet werden kann. Dieser geringe Bindemittelanteil gibt im Zusammenhang mit dem Fehlen aller Füllstoffe und dem besonderen Lösungsmittelgemisch die angestrebte hochdiffundive Wirkung, die das erfindungsgemässe Korrosionsschutzmittel von allen Lacken grundsätzlich unterscheidet.

Das erfindungsgemässe Korrosionsschutzmittel härtet je nach der Temperatur in drei bis vier Stunden aus und darf nicht vor sechs Stunden überdeckt oder ein zweites Mal gestrichen werden. Nach zirka 14 Tagen ist es vollkommen ausgehärtet und dann praktisch unlösbar und verrottungsfest, wobei aber auch eine sofortige Wirkung eintritt. Besonders hervorzuheben ist dabei die Säure- und Laugenfestigkeit über lange Zeiträume. Versuche haben ergeben, dass lediglich 96%ige Schwefelsäure und Königswasser imstande sind, das Korrosionsschutzmittel anzugreifen. Erwähnenswert ist zusätzlich, dass mit Hilfe des erfindungsgemässen Korrosionsschutzmittels imprägniert, gebunden und verfestigt werden kann. Ausserdem wird eine hohe Abriebs- und Schlagfestigkeit erreicht. Das Korrosionsschutzmittel kann bei −20°C auf eisfreiem Untergrund und bis +40°C verarbeitet werden.

Aufgrund dieser Eigenschaften ist das neue Korrosionsschutzmittel vor allem für die Verwendung auf feuchtem Untergrund geeignet, obwohl es selbstverständlich auch auf trockenem Untergrund verarbeitet werden kann. Die Imprägniereigenschaften lassen ausserdem in vielen Fällen ein besonderes Reinigen des Untergrundes, beispielsweise durch Sandstrahlen, als überflüssig erscheinen.

Zum Auftragen werden günstigerweise Pinsel oder Bürsten verwendet, weil nach dem Aushärten des Korrosionsschutzmittels dieses nicht mehr gelöst werden kann. Schläuche und Spritzgeräte müssen daher unbedingt vor dem Aushärten gereinigt werden.

Wegen der Möglichkeit, das Korrosionsschutzmittel direkt auf feuchtem Untergrund auftragen zu können, ist es besonders für den Schiffsbau, für den Kessel- und Rohrbau sowie für den Stahlkonstruktionsbau geeignet.

Das erfindungsgemässe Korrosionsschutzmittel ist aber nicht nur für Eisen oder Metalle geeignet, sondern lässt sich auf alle anderen Werkstoffe anwenden. Insbesondere für die Bauwirtschaft ergeben sich mit dem neuen Korrosionsschutzmittel neue Möglichketien, weil das erfindungsgemässe Korrosionsschutzmittel auch auf feuchtem Beton, Mauerwerk und Holz mit gleich gutem Erfolg aufgetragen werden kann, wodurch auch derartige Werkstoffe wirksam geschützt werden.

Obwohl die Gewichtsanteile der drei Bestandteile des Korrosionsschutzmittels innerhalb der angegebenen Grenzen beliebig variiert werden können, ergeben sich besonders günstige Verhältnisse, wenn die Gewichtsanteile der drei Bestandteile gleich sind.

**Patentansprüche**

1. Korrosionsschutzmittel, enthaltend Polyurethanharz auf Diisocyanatbasis sowie Methylisobutylketon und Toluol, dadurch gekennzeichnet, dass es aus 20–40 Gew.-% Polyurethanharz auf Diisocyanatbasis, 20–40 Gew.-% Methlyisobutylketon und 20–40 Gew.-% Toluol besteht.

2. Korrosionsschutzmittel nach Anspruch 1, dadurch gekennzeichnet, dass es aus gleichen Gewichtsanteilen der drei Bestandteile besteht.

**Claims**

1. A corrosion inhibitor containing a polyurethane resin derived from diisocyanates and also containing methyl isobutyl ketone and toluene, characterized in that it consists of 20 to 40% by weight polyurethane resin derived from diisocyanates, 20 to 40% by weight methylisobutyl ketone and 20 to 40% by weight toluene.

2. A corrosion inhibitor according to claim 1, characterized in that it consists of the three components in equal parts by weight.

**Revendications**

1. Inhibiteur de corrosion contenant de la résine de poly-uréthanne à base de di-isocyanate, ainsi que de la méthyl-isobutyl-cétone et du toluène, caractérisé par le fait qu'il est formé de 20 à 40% en poids de résine de poly-uréthanne à base de di-isocyanate, de 20 à 40% en poids de méthyl-isobutyl-cétone et de 20 à 40% en poids de toluène.

2. Inhibiteur de corrosion selon la revendication 1, caractérisé par le fait qu'il est formé de proportions égales, en poids, des trois constituants.